## Europäisches Patentamt
## European Patent Office
## Office européen des brevets

(19)

(11) Numéro de publication: **0 118 341**
**B1**

(12)

# FASCICULE DE BREVET EUROPÉEN

(45) Date de publication du fascicule du brevet:
**08.04.87**

(21) Numéro de dépôt: **84400247.7**

(22) Date de dépôt: **06.02.84**

(51) Int. Cl.⁴: **F 41 G 9/00,** F 41 G 3/26, G 01 C 23/00

(54) **Système de contrôle du vol et de conduite de tir d'un aéronef armé de canons utilisable comme simulateur de tir.**

(30) Priorité: **18.02.83 FR 8302720**

(43) Date de publication de la demande:
**12.09.84 Bulletin 84/37**

(45) Mention de la délivrance du brevet:
**08.04.87 Bulletin 87/15**

(84) Etats contractants désignés:
**DE GB**

(56) Documents cité:
**FR-A-2 107 236**
**US-A-4 145 952**
**US-A-4 312 262**

**AVIATION WEEK & SPACE TECHNOLOGY, 17 août 1970, pages 40-44, New York, US B. MILLER: "New gunsight concept evaluated"**

(73) Titulaire: **THOMSON- CSF, 173, Boulevard Haussmann, F-75379 Paris Cedex 08 (FR)**

(72) Inventeur: **Maureau, Claude, THOMSON- CSF SCPI 173, bld Haussmann, F-75379 Paris Cedex 08 (FR)**

(74) Mandataire: **Trocellier, Roger, THOMSON- CSF SCPI 19, avenue de Messine, F-75008 Paris (FR)**

## Description

L'invention concerne un système de contrôle du vol et de conduite de tir d'un aéronef, dit avion, utilisable comme simulateur de tir. L'invention rend possible le tir au canon par des avions en évolution. Il est connu en effet que dans le combat aérien entre aéronefs, lorsque les conditions d'utilisation d'engins autodirecteurs pour la destruction de cibles mobiles sont dépassées, c'est au canon que le combat doit se conduire.

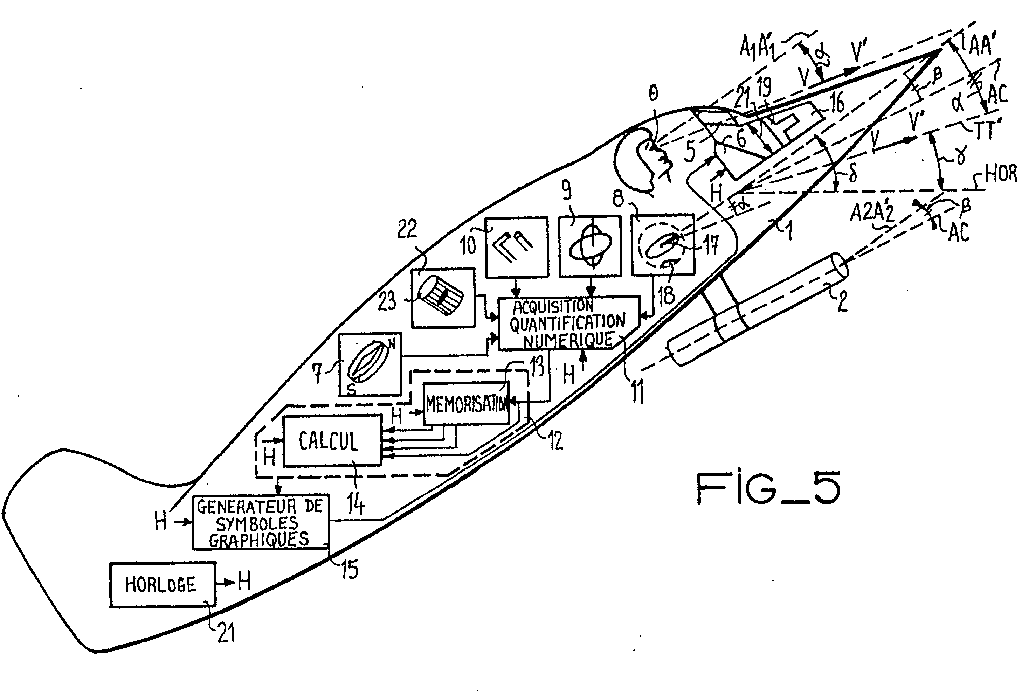

On rappelle ce que sont les paramètres cinématiques de vol d'un avion. Ces paramètres sont representés à la figure 5. Cette figure montre l'axe avion longitudinal AA', défini comme passant par deux points caractéristiques de l'avion 1, ainsi que l'axe canon AC, colinéaire au tube du canon 2, et écarté de l'axe A2A'2 parallèle à l'axe AA', d'un angle β dit angle d'implantation du canon. On distingue également sur cette figure l'axe TT' tangent à la trajectoire de l'avion, et faisant avec l'axe AA' un angle dit angle d'incidence ou angle d'attaque. L'angle mesuré entre l'axe TT' et l'horizontale Hor, parallèle à la surface de la terre, est dit pente de la trajectoire. L'angle entre l'axe AA' et l'horizontale Hor est dit angle d'attitude. Ce dessin permet d'exprimer qu'à tout instant l'angle d'attitude est égal à la somme algébrique de l'angle d'attaque et de la pente de la trajectoire. On définit enfin le vecteur vitesse VV', de longueur unité, passant par la position moyenne d'observation O de l'oeil du pilote, et faisant avec un axe A1A'1, parallèle à l'axe AA' et passant également par la position 0, un angle égal à l'angle d'attaque. Ces définitions sont notamment développées par Messieurs Georges, VERNET et WANNER dans le livre "La mécanique de vol" paru chez DUNOD (France) au premier trimestre 1969.

Il est connu lors d'une phase de vol de donner au pilote d'un avion des indications concernant l'évolution de cet avion. Ces indications, sont généralement distribuées au pilote par l'intermédiaire d'un dispositif viseur tête haute 6 ou éventuellement par un viseur de casque. Dans ces systèmes, un viseur 5 semi-réfléchissant est interposé entre le pilote et le paysage extérieur. Le pilote peut observer le paysage par transparence au travers de ce viseur. Il peut également percevoir, par réflexion sur ce viseur, l'ensemble des indications qui lui sont tournies.

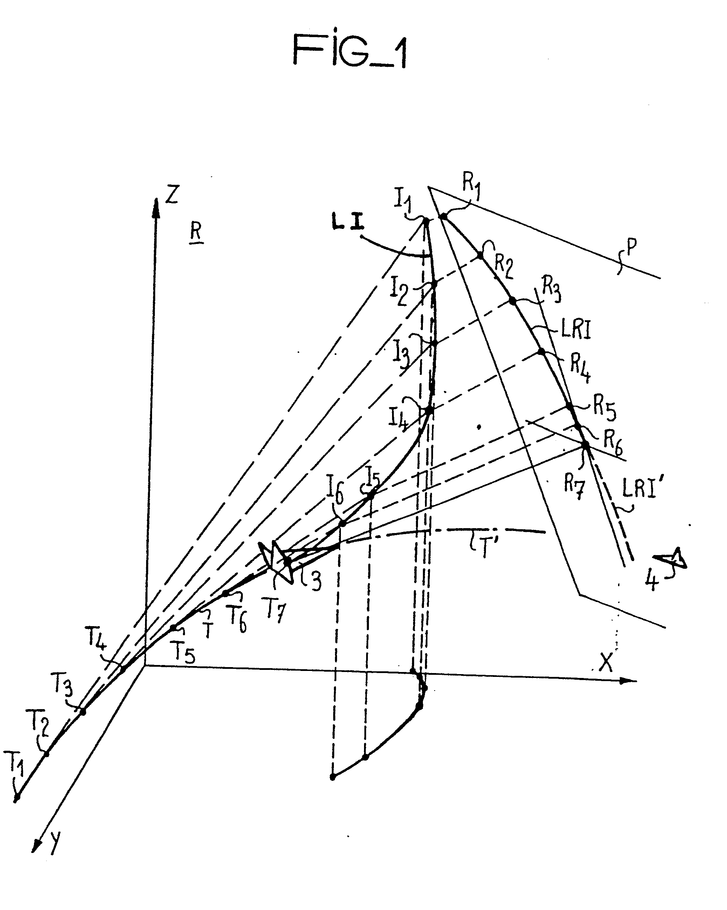

De manière à améliorer les résultats des tirs exécutés par ce pilote lors de combats aériens, il est connu du document B.Miller: "New gunsight concept evaluated", Aviation Week & Space Technology, 17 Août 1970, pp. 40-44, New York, US, de lui donner comme indication ce que l'on appelle une ligne de traceurs (en anglais: hot line). Cette ligne de traceurs est décrite par la figure 1. Sur cette figure on remarque un avion 3 évoluant dans un référentiel R à la poursuite d'un avion 4. L'avion 3 a décrit la trajectoire T allant de T1 à T7. Les points T1, T2... sont séparés les uns des autres par des distances égales aux distances parcourues chaque fois par l'avion 3 pendant une durée donnée, dite durée ou temps de cycle. On a présenté symboliquement une ligne de représentation des impacts LRI. Cette ligne LRI est obtenue par projection d'une ligne d'impact LI sur un plan P perpendiculaire en R7 à la tangente T7-R7 à la trajectoire T. Cette ligne LI est le lieu des points I où se trouveraient tous les obus tirés par l'avion si celui-ci avait effectué son tir en permanence depuis sa position T1 jusqu'à sa position T7. On appelle cette ligne LI, ligne de traceurs car il est connu dans les tirs en rafales de remplacer certains obus par des obus traçants dont la partie arrière émet un rayonnement visible permettant de saisir leur évolution.

A titre indicatif, la figure 1 a été dessinée en prenant une vitesse des obus tirés d'environ le double de celle de l'avion. Il s'ensuit que les distances respectives T1-I1, T2-I2 etc... sont sensiblement le double des distances T1-T7, T2-T7, etc... Dans la pratique la vitesse réelle des obus est supérieure au double de la vitesse de l'avion. On peut constater à l'examen de la figure 1 que la dispersion des points I1 à I7 sur la ligne LI est liée pour une part à la succession des instants où ont été tirés les obus (temps de cycle) et pour une autre part aux différentes positions de l'avion aux moments des tirs. On a dessiné à titre indicatif dans le plan XY horizontal du référentiel R la projection horizontale de la ligne LI.

La projection sur le plan P en ligne LRI de la ligne LI est en fait l'ensemble des indications distribuées au pilote. Le cadre en forme de parallèlogramme, où est dessiné la ligne LRI, représente le champ du viseur tête haute de l'avion. On constate que l'avion cible 4 se trouve dans ce champ. Il est intuitivement évident que l'arc de courbe LRI' dessiné en prolongement de l'arc LRI, et correspondant à la section T' future de la trajectoire T, n'est que de peu d'intérêt pour aider à la conduite du tir sur la cible 4. En effet, si l'arc LRI' coïncide avec la cible 4 on peut dire avec certitude que celle-ci échappera aux obus dans cette phase de tir. Elle y échappera pour la bonne raison que ceux-ci ne sont pas encore tirés et qu'ils atteindront cette position de coincidence quand la cible, elle, n'y sera plus.

La solution consistant à manoeuvrer l'avion 3 pour présenter la ligne LRI' légèrement en avant de la cible 4 dans le but de détruire cette cible, ne repose que sur des considérations empiriques tondées uniquement sur l'expérience du pilote. En effet, d'une part avec ce type de représentation rien ne permet d'apprécier la distance réelle entre la cible 4 et la ligne d'impact réelle LI. D'autre part les points representatifs R1 à R7 de la ligne LRI ne sont pas représentatifs ni des positions de l'avion ni de celle des obus mais sont représentatifs d'une information concernant à la fois la position de l'avion et la position des obus.

Cette dernière remarque signifie que l'extrapollation LRI' de la ligne LRI est vraisemblable mais que l'on ne peut pas dire avec sutfisamment de précision où se trouveront les points correspondant aux cycles suivants, compte tenu que les longueurs des segments Ri-Ri + 1 sont variables dans le temps. En particulier, le tait que les points R5, R6 et R7 soient près l'un de l'autre ne signifie ici nullement que l'avion vient vers une trajectoire sensiblement droite par opposition à une trajectoire courbe qu'il aurait eu auparavant et représentée par les points R1, R2, R3, et R4.

L'invention a pour objet de remédier aux inconvénients cités en proposant une représentation de l'évolution de l'avion qui soit attachée essentiellement à donner un historique de sa trajectoire et à donner, de plus, l'image prévisionnelle de la position d'une ligne d'obus tirés dans la position qu'ils occuperaient après un temps donné suivant le moment où ils ont été tirés.

L'invention concerne un système de contrôle du vol d'un aéronef, dit avion, comportant des moyens de mesure des paramètres cinématiques du vol de l'avion, des moyens de quantification numérique des paramètres mesurés, des moyens de traitement des mesures quantifiées pour élaborer des indications de vol, notamment le calcul au temps présent et relativement à un graphe de représentation de l'ordonnée du point représentatif du vecteur vitesse tonction de l'angle d'attaque de l'avion et de l'abscisse de ce point tonction du gisement de l'avion, des moyens générateurs de symboles graphiques correspondant aux indications élaborées et des moyens de visualisations des symboles graphiques produits, caractérisé en que les moyens de traitement comportent des circuits de mémorisation pour mémoriser les coordonnées des points représentatifs des vecteurs vitesse aux temps passés, et des moyens de calcul pour eftectuer successivement les opérations suivantes: calcul de la variation de ladite abscisse entre le temps présent et un temps cycliquement précédent, changement d'origine de l'axe de référence des abscisses du graphe de représentation, ledit graphe servant à la représentation des n points représentatifs des n vecteurs vitesse précédents, ledit changement correspondant à ce calcul de variation, et en ce que les moyens générateurs de symboles et de visualisation présentent un réticule comportant les n - 1 derniers points représentatifs des n - 1 derniers vecteurs vitesse ainsi que celui au temps présent, reliés chronologiquement les uns aux autres par des segments tormant une ligne unique pour taire ainsi apparaître l'historique des orientations de ce vecteur vitesse pendant la phase de vol la plus récente et permettre un meilleur pilotage de l'avion.

D'autres caractéristiques et avantages de l'invention apparaitront à la lecture de la description détaillée qui suit et qui est faite en référence aux dessins annexés dans lesquels:
- la figure 1 déjà citée, représente une ligne de traceurs et la representation qui en est donnée au pilote de l'avion;
- la figure 2, représente dans les mêmes conditions que la précédente l'historique des orientations du vecteur vitesse de l'avion à un instant donné;
- les figures 3a, 3b, 3c, montrent pendant une phase de vol les indications perçues par un pilote d'un avion muni du dispositif selon l'invention;
- la figure 4, montre en détail les indications précédentes et la manière de les utiliser;
- la figure 5, montre l'ensemble des moyens du système de l'invention coopérant au résultat recherché.

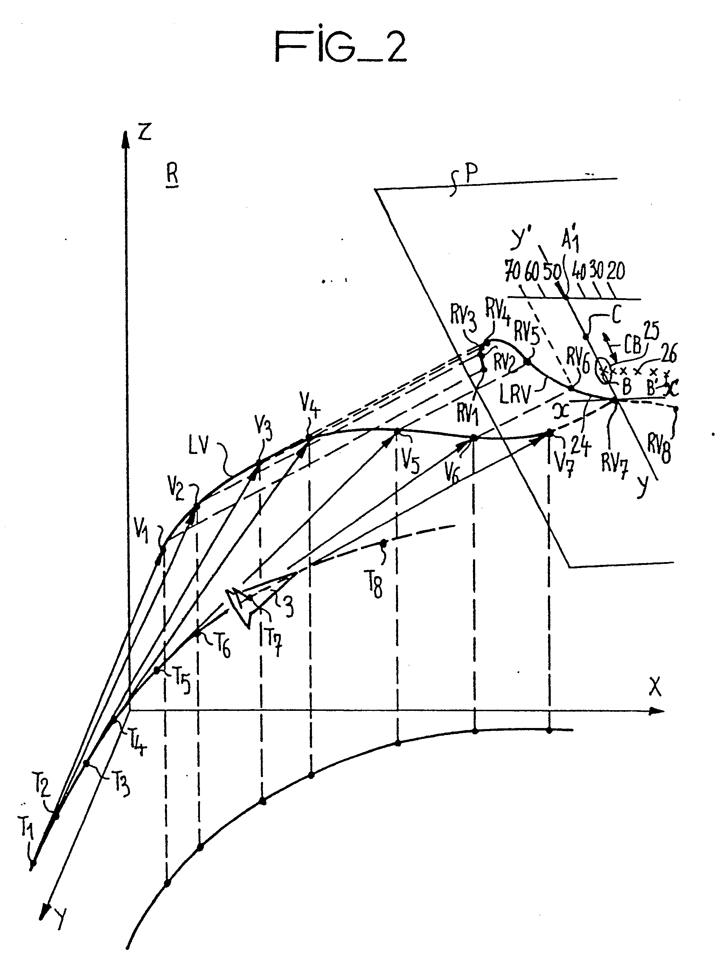

Sur la figure 2 on distingue le même avion 3 évoluant dans le référentiel R précédent. L'avion 3 a décrit la trajectoire allant de T1 à T7. A des instants cycliquement distants les uns des autres, le vecteur vitesse de l'avion avait les directions respectivement T1-V1, T2-V2, T3-V3, etc... T7-V7. Dans les mêmes conditions que précédemment, l'avion 3 étant muni du système de l'invention, une ligne LV, définie comme reliant les extrémités des différents vecteurs vitesse successifs, est projetée en une ligne représentative LRV sur un plan P, perpendiculaire à la direction du dernier vecteur vitesse T7-V7 et situé à une distance prédéterminée de l'avion. Il est possible, par ailleurs, de prolonger la ligne LRV par un segment RV7-RV8 le plus probable, compte tenu des évolutions antérieures de l'avion 3. Le point RV8 figure ainsi la position du vecteur vitesse supposée ou prédite au bout d'un certain temps.

Sachant que les points représentatifs précédents, RV1, RV2...RV6 et RV7, sont apparus cycliquement il est possible de déterminer une durée DC, par rapport à ce temps de cycle, au bout de laquelle on choisit de donner une image de la direction du vecteur vitesse prédit. Pratiquement, et dans la suite de cet exposé, l'historique du vecteur vitesse est limité aux quatre dernières valeurs, ici en l'occurence RV4, RV5, RV6 et RV7; le point prévu RV8 est déterminé pour une durée DC égale à deux fois le temps de cycle. Par position la plus probable de l'image RV8 du vecteur vitesse, on entend la direction de ce vecteur vitesse obtenue sans changer l'évolution en cours de l'avion ni ses tendances déjà amorcées. Les indications contenues dans le plan P sont celles qui sont collimatées par le viseur 5 de l'avion 3. La ligne LRV constitue un premier réticule 24 collimaté par le viseur 5 dans l'invention. Le champ de ce viseur 5 détermine alors à une distance prédéterminée le graphe de représentation de l'invention.

On a également représenté sur le plan P l'image A'1 de l'intersection de l'axe d'avion avec ce plan. Le segment A'1-RV7 est dans ces conditions directement l'image de l'angle d'attaque α de l'avion 3 quand il se trouve dans la position T7 considérée. En effet, dans le système de l'invention, la trace de l'axe avion sur le viseur 5 est un point fixe correspondant à l'intersection de l'axe A1 A'1 avec le plan P (figures 5 et 2).

Situé sur ce segment A'1-RV7, apparaît un point C obtenu par l'intersection de l'axe canon AC avec le plan P. Autrement dit, un obus qui ne subirait pas de chute balistique et qui serait tiré par le canon au moment où l'avion se trouve sur sa trajectoire à la position T7, couperait le plan P au point C.

En considérant que le plan P est à une distance dite prédéterminée, par exemple 500 mètres retenue dans la suite de l'exposé de l'invention, et compte tenu de la vitesse de l'avion et de la vitesse de sortie de tube des obus au moment du tir on peut déterminer une chute de balistique de ces obus représentée par la longueur CB. Sur le plan P cette chute balistique, est située donc en B entre la trace C de l'axe canon et l'image RV7 du vecteur vitesse au temps présent. On place à l'endroit B de cette chute balistique un deuxième réticule 25, ici un cercle ou éventuellement un polygone, de dimension égale à celle sous laquelle apparaîtrait à cette distance, la cible que l'on cherche à atteindre. Ce réticule est dit stadimétrique.

Par ailleurs enfin, connaissant l'évolution future du vecteur vitesse (RV8) on peut pareillement prédire l'évolution future de l'axe avion, de l'axe canon et donc de la chute balistique B' au bout de la durée déterminée pour la prévision. Une des particularités de l'invention consiste à relier ces deux points B et B', représentatifs des chutes balistiques, sur le viseur 5, par un troisième réticule 26 en forme de barrette, composée par exemple d'une série de croix, et que l'on appelle rafale prédictive.

Le troisieme reticule représente en effet une rafale d'obus, synthétique parce qu'en fait elle n'est pas réelle, située à la distance prédéterminée de l'avion 3 qui correspond sur le plan pratique à un certain optimum de tir habituellement pratiqué par les pilotes d'avion militaire, et dont la nature prédictive enfin est évidente ici. La rafale d'obus est synthétique car il faut bien voir qu'elle est présentée au temps présent, et qu'elle correspond aux positions effectivement occupées par les obus, au bout d'une duree donnee D après leur instant de tir, et non pas au bout d'une durée donnée après le temps present. En conséquence, par rapport au temps présent, le premier obus de la ratale, celui qui est situé en B, est présenté dans la position qu'il occupera au bout de la durée D, et le dernier obus de la rafale est présenté dans la position qu'il occupera au bout d'une durée égale à D + DC. Les obus intermédiaires étant présentés dans les positions intermédiaires qu'ils occuperont au bout de durées intermédiaires par rapport au temps présent.

La définition de la ligne LV qui a pu paraitre imprécise, n'est en fait pas nécessaire. La ligne LRV qui seule nous intéresse, elle, est tacilement traçable. L'ordonnée de ses points est représentative de l'angle d'attaque de l'avion par rapport à une direction donnée tixe de cet avion, ici l'axe A1A'1 parallèle à l'axe avion AA' au moment où cet avion se trouve dans la position T7. Ceci signifie que toutes les ordonnées des points RVi correspondent à leur angle d'attaque $\alpha_i$, respectivement défini précédemment, et qu'elles sont portées directement sur un système d'axe dont l'origine des ordonnées correspond à la direction en site de l'axe avion au temps présent. D'autre part, les abscisses de chacun des points de la ligne LVR sont données par les caps, ou gisements de l'avion aux instants considérés. Ainsi on peut voir lorsque l'avion se trouve dans la position T7, que son cap est environ au 49, que lorsqu'il était dans la position T6 son cap était environ au 70 et ainsi de suite. Pour des raisons que l'on verra plus loin, dans une première approche l'indication du cap au temps présent est située sur un axe YY' tracé verticalement sur le viseur 5 en son milieu. Ce sont les indications de cap, 49, 70..., qui défilent devant l'axe YY'. Ces indications de cap sont d'ailleurs facultatives.

Dans ces conditions, il est possible de définir ce que l'on appelle par la suite un taux de virage et qui correspond au rapport de la variation de cap à la durée pendant laquelle cette variation a été effectuée. Dans le cas présent, entre T6 et T7, en supposant par exemple que les points sont pris cycliquement tous les tiers de seconde, on obtient des variations de cap de 21° (21 = 70 - 49) pendant un tiers de seconde, ce qui donne un taux de virage de 63° par seconde.

En dehors des considérations de tir que l'on va évoquer plus loin on remarque ici un premier avantage du système de contrôle du vol d'un aéronef ou avion de l'invention résidant dans le fait que celle-ci permet d'apprécier, au cours d'une phase de vol donnée, l'évolution du taux de virage imposée à l'avion ainsi que l'évolution de son vecteur vitesse. Cette indication permet, par exemple, au pilote de réaliser plus facilement un virage à plat, c'est-à-dire d'éviter les suroscillations de son angle d'attaque telles qu'elles apparaissaient des points RV1 au points RV5. Cette indication lui permet aussi de réaliser un virage régulier de telle manière que les différents segments RVi-RVi + 1 du premier réticule soient de même longueur. Cette indication lui est particulièrement utile dans la mesure où il souhaite effectivement stabiliser son virage pour mieux chasser une position de tir.

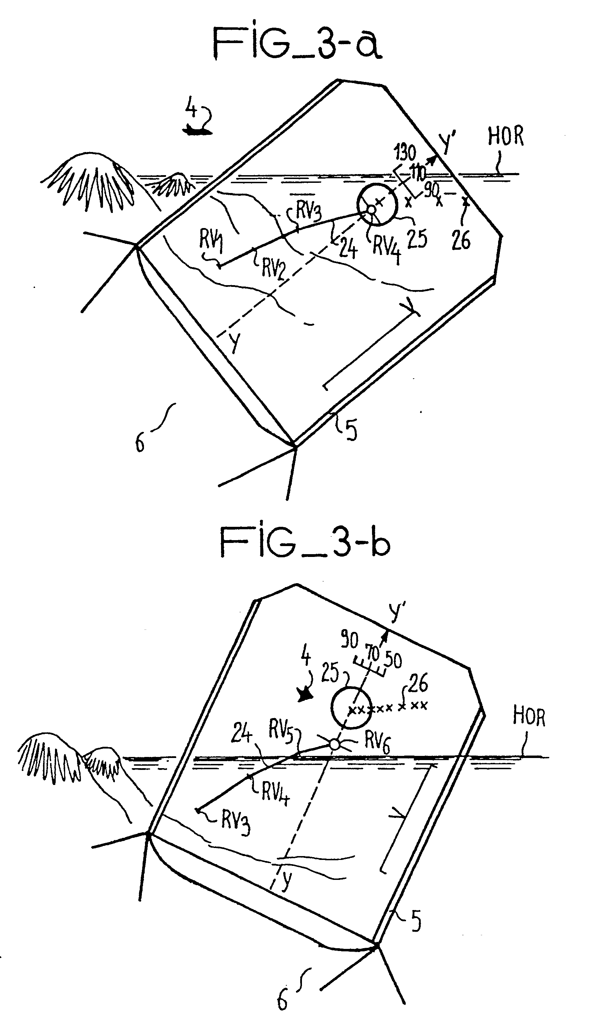

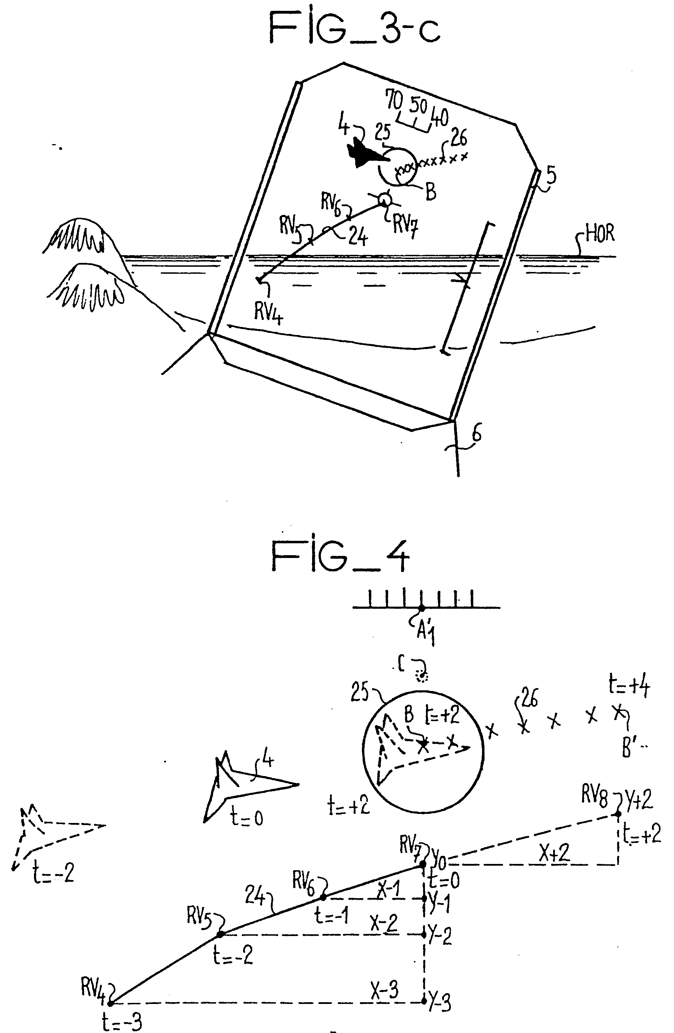

Les figures 3a, 3b, 3c s'examinent consécutivement. Elles représentent ce que perçoit le pilote, dans le viseur 5 après des durées cycliquement consécutives. Dans la figure 3a, 1a cible 4 n'est pas dans le champ du viseur 5. Les points RV1 à RV4 indiquent essentiellement que l'avion, à ce moment en T4 sur sa trajectoire, se trouve dans une phase de descente puisque tous les points RVi se situent sous l'horizon Hor visible en transparence. Ils indique cependant que cette phase de descente est en train de se terminer puisque le dernier point RV4 est plus proche de l'horizon que le premier RV1. En effet, quand la trajectoire de l'avion est horizontale le vecteur vitesse est parallèle à la direction de l'horizon et dans ces conditions son indication coïncide à l'infini avec la trace de celui-ci. La disposition de ces points RV1 à RV4 permet également de dire que l'avion tourne à droite, et que son taux de virage va en s'accentuant. En effet, le segment RV3-RV4 est plus grand que le segment RV1-RV2 et comme ces segments correspondent à une même durée on en déduit que le taux de virage va en s'accentuant.

Dans le cas particulier représenté, le taux de virage étant élevé, la rafale prédictive 26 est longue au point ici de ne plus pouvoir être représentée entiérement puisqu'elle sort des limites du dispositif.

Dans une phase suivante, figure 3b, la cible 4 entre dans le champ du viseur 5. L'avion est sur une trajectoire montante puisque le point représentatif RV6 du dernier vecteur vitesse est situé au-dessus de l'horizon. Son taux de virage va en décroissant puisque la longueur des segments du premier réticule diminue. En conséquence la rafale prédictive du troisième réticule 26 se raccourcit. On remarque que la cible 4 est vue plus petite que le deuxième réticule. En supposant que le la dimension du deuxième réticule a été choisie pour correspondre à un avion 4, de type donné, l'indication nous permet de remarquer que l'avion 4 se trouve à une distance supérieure à la distance prédéterminée pour ce réticule, ceci justifie l'appellation stadimétrique qui lui a été donnée. Cela indique par ailleurs que l'avion 3 n'est pas encore tout à fait arrivé aux conditions favorables de visée.

Dans un premier temps on a considéré que le point représentatif du vecteur vitesse au temps present est situe sur un axe YY' fixe coupant le viseur 5 verticalement dans son milieu. L'indication que l'avion change de cap est alors donnée comme cela est connu par un réticule supplémentaire comportant les indications de cap suivies par l'avion et défilant devant l'axe YY'. On peut remarquer ainsi que de la figure 3a à la figure 3c dans l'exemple, l'avion est passé du cap 110° au cap 69°.

On a dit que le point representatif du vecteur vitesse était placé sur l'axe YY' parce que l'on considérait que l'avion ne subissait pas de dérapage. Si l'avion subit un dérapage, cela signifie que son vecteur vitesse n'est pas orienté avec le même gisement que le gisement de l'axe avion AA'. L'avion avance ainsi en crabe par rapport à la masse d'air qui le porte. On peut taire apparaître le dérapage par une différence d'orientation en décalant le point représentatif du vecteur vitesse au moment présent, par rapport à l'axe YY', d'une grandeur correspondant à l'ampleur de ce dérapage. On indiquera par la suite comment ce dérapage peut être mesuré.

D'autres indications peuvent éventuellement être fournies au pilote, notamment sa réserve de puissance et aussi sa situation en vitesse. Cette dernière peut être représentée par une échelle analogique orientée parallèlement à l'axe YY' sur la droite du viseur 5 et sur laquelle se déplace un pointeau indiquant, par exemple, la valeur de la vitesse par rapport à la vitesse d'évolution maximale de l'avion. Dans le cas de la phase de la figure 3a on constate que l'avion est à vitesse maximum alors que, le pilote ayant réduit la puissance, l'avion est à vitesse favorable au virage dans la phase de la figure 3b. Les indications de cap, de dérapage, et les indications de situation de la vitesse et/ou de réserve de puissance sont des indications annexes donnees au pilote de l'avion.

Dans le cas de la figure 3c, on constate que l'avion cible 4 est maintenant de même taille que le deuxième réticule 25 ce qui signifie que la cible 4 est à la distance prédéterminée pour être tirée, c'est-a-dire à 500 mètres dans l'exemple. Le troisième réticule constituant la rafale prédictive évolue régulièrement comme on peut le constater de la figure 3a à la tigure 3c. D'une manière préférée dans l'invention la durée D, correspondant au temps de parcours de l'obus, est calculee pour que cette rafale prédictive corresponde à une ligne d'obus se situant à la distance prédéterminée de l'avion tireur. C'est-à-dire qu'elle se trouve à la distance où également se trouve la cible. D'autre part, cette rafale correspond également à la position future des obus si à partir de l'instant présent (T7) le pilote actionne sa commande de tir.

Sur la figure 4, on présente l'ensemble des indications correspondant à différentes phases de vol. Ces phases sont séparées les unes des autres par des durées égales à des temps de cycle. Dans l'exemple ces durées de cycle sont de l'ordre de 0,33 seconde. La figure 4 représente ce que voit le pilote de l'avion à travers le viseur 5. En particulier, le premier réticule 24 comporte 3 segments et 4 points représentatifs du vecteur vitesse: au temps de cycle présent, et aux temps $t = -1$, $t = -2$ et $t = -3$ fois le temps de cycle. Le pilote perçoit également le deuxième réticule 25, représenté ici par un cercle dont la dimension correspond alors, au temps présent, à la dimension de la cible 4, et le troisième réticule 26 constituant la rafale prédictive. L'orientation de cette rafale est déduite de la position du point RV8 représentatif de l'orientation supposée du vecteur vitesse au bout d'un temps choisi égal ici à deux fois au temps de cycle. La représentation proprement dite du point RV8 n'est pas necessaire dans l'invention. Elle est donnée ici seulement à titre explicatif.

Dans l'hypothèse décrite précédemment, où la vitesse d'éjection des obus est de l'ordre de 550 mètres par seconde, et où la vitesse de l'avion est de l'ordre de 210 mètres par seconde, la vitesse totale des obus sera de l'ordre de 760 mètres par seconde. Dans l'hypothèse encore où l'on cherche à représenter les obus à une distance prédéterminée de 500 mètres de leurs points de tir, et où l'on retient comme temps de cycle 0,33 seconde, on peut dire que l'obus tiré au temps présent atteindra le milieu du deuxième réticule 25 et donc le début de la rafale prédictive au bout d'une durée égale à deux tois le temps de cycle. En effet, pour parcourir les 500 mètres à la vitesse de 760 mètres par seconde, l'obus mettra environ 0,66 seconde (760 m/s X 0,66s sensiblement égal à 500 mètres)soit deux tois le temps de cycle. Dans cette application particulièrement simple les durées D et DC sont donc toutes deux égales à deux tois le temps de cycle.

Le temps de cycle étant de 0,33 seconde, le temps mis par l'obus pour parcourir la distance prédéterminée sera donc de l'ordre de deux fois le temps de cycle. Si le pilote actionne alors sa commande de tir pendant une durée égale à deux fois le temps de cycle, de t = 0 à t = + 2, au moment où il s'arrête de tirer, premièrement son vecteur vitesse sera dans la position supposée au début (RV8), et deuxièmement les premiers obus tirés arrivent sur le lieu où avait été pointé le deuxième réticule (B). La rafale durant deux temps de cycle, les derniers obus arrivent alors à l'endroit indiqué par la fin de la rafale (B') au bout d'un temps égal à quatre fois le temps de cycle (t = + 4).

Dans ces conditions, la destruction de la cible est très probable si celle-ci se trouve au temps t = + 2 à l'endroit pointé par le deuxième réticule au temps présent (t = 0). En effet, sauf dispersion trop importante des obus du canon, le premier obus tiré atteindra la cible. On constate en conséquence, que du temps t = 0 au temps t = + 2 la cible doit avoir parcouru une trajectoire dont l'image dans le viseur 5 est sensiblement le symétrique du troisième réticule par rapport au centre du deuxième réticule. Cette procédure particulierement simple a respecter est de nature a donner une grande etficacité au simulateur de tir de l'invention. En effet, du temps t = + 2 au temps t = + 4 la trajectoire de l'avion cible 4 a alors de grandes chances de coïncider avec la position réelle des obus de la rafale dont une image est donnée dès le temps présent.

Sur le plan pratique, compte tenu de la dispersion des obus tirés et du fait que la cible visée n'est pas coopérante, le pilote aura pour tâche d'aligner, à tout moment, la cible dans l'alignement de la barrette et avec un écart par rapport au début de celle-ci sensiblement égal à la longueur de cette barrette. Le pilote utilisant le système de l'invention doit alors se rapprocher de la cible comme pour venir à son contact.

Jusqu'ici, ont ete decrits les effets obtenus par le système de contrôle de vol de l'invention. Ce système va être présenté maintenant en référence à la figure 5. Sur cette figure on distingue un avion 1 muni d'un canon 2 et équipé du système selon l'invention. Ce système comprend des moyens de mesures des paramètres cinématiques du vol de l'avion numerotes de 7 à 10, des moyens de quantification numérique 11 des paramètres mesurés, des moyens de traitement 12 des mesures quantifiées, des moyens 15 générateurs de symboles graphiques et des moyens de visualisation 16 d'un type tête haute.

Les moyens de mesure des paramètres cinématiques du vol de l'avion, nécessaires pour la présentation du premier réticule sur le viseur tête haute 16, comportent essentiellement un dispositif 7 de mesure de l'abscisse du point représentatif du vecteur vitesse fonction du gisement et symbolisé sous la forme d'une boussole, et un dispositif de mesure de l'ordonnee de ce point fonction de l'angle d'attaque et symbolisé par une sonde d'incidence 8. La sonde 8 peut être constituée par une ailette 17 pouvant tourner autour d'un axe central, normal au plan déterminé par l'axe canon et l'axe avion, et colinéaire en son centre à un cylindre circulaire 18. Ce cylindre 18 comporte un ensemble de fentes allongées sur ses génératrices et distribuées régulièrement à sa périphérie. Lorsque l'avion vole les filets d'air circulant autour de l'avion penetrent dans les fentes du cylindre 18 et imposent à l'ailette 17 une position parallèle à leur direction. Par rapport à une direction de référence, représentée ici comme le prolongement de l'axe AA', l'ailette prend une orientation parallèle au vecteur vitesse de l'avion et donc elle mesure l'angle d'attaque α de cet avion.

Les valeurs des coordonnées des points représentatifs des vecteurs vitesse sont en réalité obtenues par des calculs correspondant à des compositions géométriques effectuées sur les mesures des différents angles régissant la position de l'avion. Ainsi les abscisses et ordonnées de ces points représentatifs sont toutes deux calculées en fonction de l'angle d'attaque, de l'angle de dérapage, de l'angle de cap, de l'angle de roulis et de l'angle d'assiette. Les algorithmes de ces calculs sont connus des spécialistes en aeronautique et sont notamment décrits dans la publication citée plus haut. Les variantes d'élaboration de ces algorithmes ont pour objet de donner avec une plus ou moins grande exactitude les valeurs des coordonnées à prendre en compte. Les traitements ulterieurs effectues dans l'invention sur les valeurs de ces coordonnées, s'appliquent quel que soit l'algorithme retenu pour la détermination de ces valeurs. Ainsi, dans certains cas, comme dans celui où la mesure de l'angle de dérapage est prise en compte, l'invention propose des corrections de représentation pour rendre cette représentation plus exacte.

La vitesse et l'orientation du vent peuvent également intervenir. C'est effectivement le cas lorsque l'avion, soumis au vent, prend pour cible un objectit qui n'est pas soumis au vent: hydroglisseur ou char d'assaut par exemple. Dans ces conditions les algorithmes de calcul des valeurs des coordonnées tiennent compte de la vitesse et de l'orientation du vent. Le traitement proprement dit effectué par le système de l'invention reste le même.

Les valeurs obtenues par ces deux moyens 7 et 8 sont introduites aux entrées d'un dispositif de quantification numérique 11 piloté par ailleurs par un signal d'horloge H, et pouvant comprendre dans la pratique des échantillonneurs bloqueurs suivis de codeurs. Les signaux délivrés par les moyens de quantitication 11 sont ensuite introduits dans les moyens de traitement 12. Les signaux quantiés correspondant aux valeurs des coordonnées sont introduits dans un circuit mémoire 13.

Dans un exemple, où les valeurs d'abscisse et d'ordonnée sont quantifiées sur des mots de 6 bits, et où le temps de cycle est de un tiers de seconde, on retient la représentation de quatre vecteurs vitesse: celui au temps présent et les trois précédents c'est-à-dire un historique d'une seconde. La capacité de la mémoire en mots de 6 bits est alors égale a deux fois (une fois pour les abscisses et une tois pour les ordonnées) la fréquence d'échantillonnage des échantillonneurs bloqueurs. En effet, pendant une seconde ces échantillonneurs délivrent un nombre de mots égal à la valeur de leur fréquence d'échantillonnage imposé par le signal H délivré par l'horloge 21.

Le circuit mémoire 13 reçoit donc des mots mémoire de 12 bits (6 premiers bits pour l'abscisse et les 6 autres pour l'ordonnée) à son entrée. L'adresse de chacun de ces mots mémoires s'incrémente d'un cran à chaque temps d'horloge quand un nouveau mot mémoire est produit par le circuit 11. Cette memoire comporte 3 sorties intermédiaires permettant de connaître à tout moment le mot mémoire produit à l'instant présent et les mots mémoires qui avaient été produits, il y a respectivement 1, 2 et 3 fois le temps de cycle.

Ainsi lorsqu'une nouvelle mesure est effectuée, le circuit de calcul 14 calcule, sur les six premiers bits des mots la variation d'abscisse entre la nouvelle valeur obtenue et chacune des valeurs obtenues aux temps de cycle précédents, il affecte à la nouvelle valeur obtenue une abscisse nulle (position au milieu du viseur sur l'axe YY') et à chacune des valeurs précédentes une abscisse correspondant au calcul de la différence des valeurs. Si l'on appelle $x_{-3}$, $x_{-2}$, $x_{-1}$, et $x_0$ les valeurs d'abscisse correspondant au gisement obtenues respectivement aux temps t = - 3, t = - 2, t = - 1 et au temps présent, le circuit de calcul 14 atfecte aux points représentatifs respectivement RV4, RV5, RV6 et RV7 (voir figure 4) des abscisses dites affectées:

$X_{-3} = x_0 - x_{-3}$; $X_{-2} = x_0 - x_{-2}$; $X_{-1} = x_0 - x_{-1}$; et $X_0 = x_0 - x_0 = 0$.

Les coordonnées des points représentatifs du vecteur vitesse de l'avion, sont ainsi définies en abscisse par rapport à une référence continuement variable. Cette référence correspond à chaque instant au gisement instantané de l'avion au temps présent.

La mémoire 13 reçoit également les nouvelles valeurs d'ordonnées, correspondant à des mesures d'angle d'attaque, en synchronisation avec celles de gisement. Les autres parties des mots de la mémoire permettent de disposer à tout moment de ces valeurs au temps présent et à des temps précédents correspondant à une fois, deux fois, où trois fois la durée du temps de cycle. Les ordonnées, dites affectées Yi, calculées par le circuit 14 sont égales aux valeurs yi des ordonnées elles-mêmes. Ceci signifie que:

$Y_{-3} = y_{-3}$, $Y_{-2} = y_{-2}$, $Y_{-1} = y_{-1}$ et que $Y_0 = y_0$.

Les coordonnées affectées (Xi, Yi) sont ensuite introduites à l'entrée d'un générateur de symboles graphiques 15 piloté également par le signal H d'horloge. Ce générateur 15, d'un type similaire à celui décrit dans le brevet français publié sous le n°2.218.646 de la demanderesse à pour objet de produire les signaux électriques de nature à assurer la représentation du premier réticule sur le viseur 5.

Le moyen de visualisation 16 consiste en un viseur tête haute 6 d'un type connu comportant en particulier un écran cathodique 19, un objectif de collimation 21 des objets lumineux produits par l'écran cathodique, et un dispositif viseur semi-réfléchissant 5 assurant la superposition du paysage et des indications lumineuses observées.

Il est également possible de programmer le générateur de symboles 15 pour qu'il produise le deuxième réticule. Sans information complémentaire ce deuxième réticule est centré sur la trace C de l'axe du canon. La position de la trace C de l'axe canon est en effet connue par construction à partir de la trace A'1 de l'axe avion. La connaissance de la chute balistique CB, connaissant la vitesse de sortie de canon des obus, ne peut être appréciée qu'avec la mesure de la vitesse de l'avion. L'orientation en site de cette vitesse est mesurée, d'une manière connue, dans un capteur 9 comportant un gyroscope orienté verticalement pour permettre la mesure de l'angle d'attitude de l'avion. La grandeur de cette vitesse est mesurée par un capteur 10 de pression d'un type "tube de Pitot" disposé sur la surface de la carlingue de l'avion. En additionnant vectoriellement la vitesse de l'avion et la vitesse de sortie des obus, on obtient la vitesse vectorielle totale des obus par rapport au référentiel R. Par un calcul de balistique bien connu des artificiers, il est possible de calculer dans le circuit 14 la chute balistique CB par rapport à la trace C de l'axe du canon à la distance prédéterminée. Cette chute balistique CB peut dans la pratique être effectuée dans un calculateur de bord indépendant exécutant un programme spécifique. Le calcul de cette fonction balistique est entendue ici comme faisant partie des moyens de calcul 14. Ayant calculé cette chute balistique, il est alors tout à fait possible de placer le deuxième réticule à l'endroit correspondant sur le viseur 5.

L'extrapolation permettant le calcul dans le circuit 14 des coordonnées affectées au point représentatif du vecteur vitesse RV8, deux temps de cycle après le temps présent, est préférentiellement donnée par une formule mathématique du type KALMAN où à défaut par une formule plus simple, par exemple:

$Y_{+2} = 5Y_0 - 6Y_{-1} + 2Y_{-2}$
$X_{+2} = 2X_{-2} - 6X_{-1}$

Dans ces formules, Xi et Yi représentent les coordonnées des points représentatifs des vecteurs vitesse passés, présent, et prédit (figure 4). D'autres formules peuvent être également envisagées en fonction du type de prédiction choisi et des possibilités de calcul en temps réel du circuit 14. On déduit de ces formules que si l'évolution de l'avion est régulière, et si les deux segments RV6-RV7 et RV5-RV6 sont égaux et dans le prolongement l'un de l'autre, le segment RV7-RV8 sera le symétrique par rapport au point RV7 du segment RV5-RV7.

Les coordonnées du point B' sont calculées de la même manière que les coordonnées du point B. C'est-à-dire que le calcul de chute balistique tient alors compte des paramètres cinématiques d'un avion qui se trouverait dans la position RV8.

On a dit que l'avion tireur se rapproche de la cible sensiblement pour aller à son contact. Ceci signifie que du début de la phase de tir a la fin de cette phase de tir, la distance séparant l'avion tireur de la cible n'est pas constante. En conséquence la valeur de la chute balistique varie du début à la fin de ce tir. Il est utile de tenir compte de cette variation de distance de tir. En considérant une vitesse de rapprochement sur la cible, arbitraire mais fondée sur l'expérience, et qui peut de façon typique être prise de l'ordre de 150 mètres par seconde, on en déduit que pendant la durée de tir (2 temps de cycle) l'avion tireur s'est rapproché de 100 mètres de la cible (150m/s X 2 X 0,33 = 100m). Pour une distance moyenne de tir prédéterminée égale à 500 mètres, il y aura donc lieu de considérer des chutes balistiques correspondant à des distances prédéterminées variant entre 550 mètres et 450 mètres dans l'exemple. On modifie les algorithmes de calcul du circuit 14 correspondant aux calculs de chute balistique, en conséquence. Avec un avion muni d'un radar, la vitesse de rapprochement peut être mesurée et elle peut être introduite dans les algorithmes de calcul de correction de tir du circuit 14.

Ces corrections de chute balistique qui peuvent être calculées une fois pour toute pour chaque attitude de l'avion, peuvent par ailleurs être tabulées et être prises en compte par les moyens de traitement 12 pour corriger les positions des deuxième et troisième réticules. Cette réalisation comportant les corrections de chute balistique dues au rapprochement est une variante préférée du dispositif de l'invention.

Il faut ici ajouter que les données chiffrées (0,33 secondes, 500 mètres, 100 mètres, 4 instants, 6 bits...) qui figurent dans la description ne l'ont été qu'à titre purement indicatif, dans l'unique souci de simplifier l'explication d'un système de représentation complexe et changeant. Ces données ne sont nullement limitatives de l'invention.

Bien que les situations de dérapage soient actuellement peu recommandées et peu utilisées par les pilotes d'avions, il est utile de concevoir une correction supplémentaire au cas où un tel dérapage surviendrait. En effet ces dérapages sont parfois utilisés sur des hélicoptères et il est possible, sinon probable, que des déplacements par translations latérales soient admis comme normaux pour des avions qui entreront en service dans l'avenir. La mesure du dérapage peut se faire au moyen d'une sonde d'incidence 22 identique à la sonde 8 mais dont le cylindre 23 est orienté perpendiculairement au plan des ailes de l'avion. Par rapport à une direction de référence, orientée parallèlement à l'axe de l'avion, cette sonde d'incidence 22 permet de mesurer l'ampleur du derapage. La correction correspondante a pour effet de déplacer le point représentatif du vecteur vitesse au temps présent légèrement en retrait ou en avance par rapport à l'axe YY'. Cette correction est effectuée en réalisant un deuxième changement d'axe du graphe de représentation des réticules.

Il faut bien distinguer dans l'invention la différence existant entre le rythme de l'horloge et le rythme imposé par les temps de cycle. L'image globale des réticules visible au travers du viseur 5 n'est pas modifiée seulement à chaque temps de cycle. Elle évolue continuement au rythme de l'horloge par exemple à une fréquence de 50Hz.

La présente invention est destinée à donner une efficacité accrue aux canons montés sur des avions, notamment les avions à réaction. Elle peut par ailleurs être utilisée avec profit pour l'entraînement au tir au canon.

Dans son application prévue pour la génération actuelle de tête de visée, on envisage de représenter quatre vecteurs; ce nombre pourrait être plus grand avec des têtes de visée ayant des champs plus grands.

## Revendications

1. Système de contrôle du vol d'un aéronef dit avion (1) comportant des moyens (7 à 10) de mesure des paramètres cinématiques du vol de l'avion, des moyens (11) de quantitication numérique des paramètres mesurés, des moyens (12) de traitement des mesures quantifiées pour élaborer des indications de vol, notamment le calcul, au temps présent (t = 0) et relativement à un graphe de représentation, de l'ordonnée ($y_i$) du point représentatif du vecteur vitesse fonction de l'angle d'attaque ($\alpha$) de l'avion et de l'abscisse ($x_i$) de ce point fonction du gisement de l'avion, des moyens (15) générateur de symboles graphiques correspondant aux indications élaborées et des moyens (16) de visualisation de symboles graphiques produits, caractérisé en ce que les moyens (12) de traitement comportent des circuits (13) de mémorisation pour mémoriser les coordonnées des points représentatits des vecteurs vitesse aux temps passés, et des moyens de calcul (14) pour effectuer successivement les opérations suivantes: calcul de la variation de ladite abscisse entre le temps présent (t = 0) et un temps cycliquement précédent (t = - 1), changement d'origine de l'axe de référence des abscisses du graphe de représentation, le dit graphe servant à la representation des n points représentatifs des n vecteurs vitesse précédents, ledit changement correspondant à ce calcul de variations, et en ce que les moyens (15) générateur de symboles et (16) de visualisation présentent un réticule (24) comportant les n-1 derniers points représentatifs des n-1 derniers vecteurs vitesse ainsi que celui du temps présent, reliés chronologiquement les uns aux autres par des segments (RVi-RVi+1) formant une ligne unique pour faire ainsi apparaître l'historique des orientations de ce vecteur vitesse pendant la phase de vol la plus récente et permettre un meilleur pilotage de l'avion.

2. Système selon la revendication 1, caractérisé en ce que les moyens de quantitication et les moyens traitement effectuent leur travail au rythme d'une horloge (21) dont la période est sensiblement plus courte que le temps de cycle.

3. Système selon l'une quelconque des revendications 1 à 2, caractérisé en ce que les moyens (16) de visualisation sont du type tête haute (6).

4. Système selon l'une quelconque des revendications 1 à 3 caractérisé en ce que le nombre n de vecteurs vitesse représentés est de quatre.

5. Système selon l'une quelconque des revendications 1 à 4, caractérisé en ce que les moyens de mesure comportent des moyens capteurs (9) de l'attitude et des moyens (10) capteurs de la vitesse de l'avion, en ce que les moyens (12) de traitement effectuent, en outre à la suite, les opérations suivantes: calcul (14) prévisionnel des coordonnées du point représentatif du vecteur vitesse un nombre donné m de cycles après le temps présent, calcul des coordonnés des chutes balistiques (CB) à une distance de par exemple 500 mètres prédéterminée du point de tir d'un obus qui serait tiré par l'avion au temps présent et d'un autre obus qui serait tiré m cycles plus tard et en ce que les moyens (15) générateur de symboles produisent un deuxième réticule (25) stadimètrique, de la dimension présumée d'une cible (4) à atteindre à la distance prédéterminée, centré sur le graphe de représentation en un endroit (B) correspondant à la chute balistique calculée, et un troisième réticule (26) en torme de barrette reliant le centre (B) du précédent à un endroit correspondant à des mêmes éléments (B') que pour celui-ci, mais relativement au vecteur vitesse en prévision m cycles plus tard.

6. Système selon la revendication 5 caractérisé en ce que le nombre donné m de cycles vaut deux.

7. Système selon la revendication 6, caractérisé en ce que la prévision est faite par un calcul basé sur une formule mathématique d'extrapolation de type KALMAN.

8. Système selon l'une des revendications 5 ou 6, caractérisé en ce que les moyens de calcul de chute balistique comportent des moyens (9, 10) pour effectuer une correction de tir en tenant compte de la vitesse de l'avion.

9. Système selon l'une quelconque des revendications 5 à 7, caractérisé en ce que les moyens de calcul de chute balistique effectuent une correction de tir en tenant compte du rapprochement de l'avion tireur (3) et d'une cible (4).

10. Système selon l'une quelconque des revendications 1 à 8 caractérisé en ce qu'il comporte des moyens capteurs annexes (22, 23) pour effectuer sur la visualisation une correction de dérapage.

11. Utilisation d'un système de conduite de tir selon l'une quelconque des revendications 5 à 9 caractérisée en ce qu'elle se pratique dans un aéronef (3) pour faire des tirs au canon ou de l'entraînement au tir au canon.

**Patentansprüche**

1. System zur Flugkontrolle eines Flugzeugs (1) mithilfe von Mitteln (7 bis 10) zur Messung der kinematischen Parameter des Flugs, von Mitteln (11) zur digitalen Quantifizierung der gemessenen Parameter, von Mitteln (12) zur Verarbeitung der quantifizierten Meßwerte in Hinblick auf die Berechnung von Flugdaten, insbesondere die Berechnung der Ordinate $(y_i)$ des für den Geschwindigkeitsvektor in Abhängigkeit vom Angriffswinkel $(\alpha)$ des Flugzeugs repräsentativen Punkts und der Abszisse $(x_i)$ dieses Punkts in Abhängigkeit von der Lage des Flugzeugs zum gegenwärtigen Zeitpunkt $(t=0)$ und bezüglich eines Darstellungsgraphen, von Mitteln (15) zur Erzeugung graphischer Symbole entsprechend den erarbeiteten Angaben und von Mitteln (16) zur Anzeige der erzeugten graphischen Symbole, dadurch gekennzeichnet, daß die Verarbeitungsmittel (12) Speicherkreise (13) zur Speicherung der Koordinaten der repräsentativen Punkte der Geschwindigkeitsvektoren in der Vergangenheit und Rechenmittel (14) aufweisen, um nacheinander die folgenden Rechenoperationen durchzuführen: Berechnung der Variation der Abszisse zwischen Gegenwart $(t=0)$ und einer zyklisch vorausgehenden Zeit $(t=-1)$, Veränderung des Bezugsachsenursprungs der Abszissen des Darstellungsgraphen, wobei dieser Graph der Darstellung der n Punkte dient, die für die n vorausgegangenen Geschwindigkeitsvektoren charakteristisch sind, und wobei die Veränderung der Berechnung von Variationen entspricht, und daß die die Symbole erzeugenden Mittel (15) und die Anzeigemittel (16) ein Netz (24) darstellen, das die n-1 letzten für die n-1 letzten Geschwindigkeitsvektoren charakteristischen Punkt enthält sowie den Punkt bezüglich der Gegenwart, wobei diese Punkte chronologisch durch Segmente (RVi-RVi+I) miteinander verbunden sind, die eine einzige Linie bilden, um somit die Entwicklung der Orientierungen des Geschwindigkeitsvektors während der unmittelbar abgelaufenen Flugphase sichtbar zu machen und die Steuerung des Flugzeugs zu verbessern.

2. System nach Anspruch 1, dadurch gekennzeichnet, daß die Quantifizierungsmittel und die Verarbeitungsmittel ihre Arbeit im Rhythmus eines Taktgebers (21) erledigen, dessen Periode wesentlich kürzer als die Zykluszeit ist.

3. System nach einem beliebigen der Ansprüche 1 bis 2, dadurch gekennzeichnet, daß die Anzeigemittel (16) vom Überkopftyp (6) sind.

4. System nach einem beliebigen der Ansprüche 1 bis 3, dadurch gekennzeichnet, daß die Anzahl n von dargestellten Geschwindigkeitsvektoren vier ist.

5. System nach einem beliebigen der Ansprüche 1 bis 4, dadurch gekennzeichnet, daß die Meßmittel Mittel (9) zur Erfassung des Verhaltens und Mittel (10) zur Erfassung der Geschwindigkeit des Flugzeugs aufweisen, daß die Verarbeitungsmittel (12) außerdem nacheinander die folgenden Operationen durchführen: vorausschauende Berechnung (14) der Koordinaten des für den Geschwindigkeitsvektor charakteristischen Punkts zu einem Zeitpunkt entsprechend eine gegebene Anzahl m von Zyklen nach der Gegenwart, Berechnung der Koordinaten der ballistischen Fallkurven (CB) in einer vorgegebenen Entfernung von beispielsweise 500 Metern von einem Abschußpunkt eines Projektils, das vom Flugzeug zum gegenwärtigen Zeitpunkt abgeschossen würde, und des Abschußpunkts eines anderen Projektils, das m Zyklen später abgeschossen würde, und daß die Mittel (15) zur Erzeugung von Symbolen ein zweites "stadimetrisches" Netzwerk (25) der vermuteten Abmessung eines in der vorgegebenen Entfernung zu erreichenden Ziels (4) erzeugen, das auf dem Darstellungsgraphen in einem Punkt (B) zentriert ist, der dem berechneten ballistischen Fall entspricht, und daß die Mittel (15) ein drittes Netzwerk (26) in Balkenform erzeugen, das das Zentrum (B) des vorhergehenden Netzwerks mit einer Stelle verbindet, die denselben Elementen (B') wie für dieses entspricht, aber auf den m Zyklen später zu erwartenden Geschwindigkeitsvektor bezogen ist.

6. System nach Anspruch 5, dadurch gekennzeichnet, daß die gegebene Zahl m von Zyklen zwei ist.

7. System nach Anspruch 6, dadurch gekennzeichnet, daß die Vorausschau durch eine Berechnung erfolgt, die auf einer mathematischen Extrapolationsformel vom KALMAN-Typ beruht.

8. System nach einem der Ansprüche 5 oder 6, dadurch gekennzeichnet, daß die Mittel zur Berechnung der ballistischen Fallkurve Mittel (9, 10) enthalten, um eine Korrektur des Abschusses unter Berücksichtigung der Geschwindigkeit des Flugzeugs durchzuführen.

9. System nach einem beliebigen der Ansprüche 5 bis 7, dadurch gekennzeichnet, daß die Mittel zur Berechnung der ballistischen Fallkurve eine Korrektur des Abschusses unter Berücksichtigung der Annäherung des schießenden Flugzeugs (3) an ein Ziel (4) durchführen.

10. System nach einem beliebigen der Ansprüche 1 bis 8, dadurch gekennzeichnet, daß es zusätzliche Mittel (22, 23) besitzt, um bei der Anzeige eine Korrektur des Drifts durchzuführen.

11. Verwendung eines Feuerleitsystems nach einem beliebigen der Ansprüche 5 bis 9, dadurch gekennzeichnet, daß sie in einem Flugzeug (3) erfolgt, um Geschützschüsse auszulösen oder um solche Schüsse zu üben.

## Claims

1. A system for controlling the flight of an aircraft (1) comprising means (7 to 10) for measuring the kinematic parameters of the flight of the aircraft, means (11) for digitally quantifying the measured parameters, means (12) for processing the quantified measurements in order to establish flight data, in particular the calculation, at the present instant ($t = 0$) and with respect to a representational graph, of the ordinate ($y_i$) of the point representing the speed vector as a function of the angle of attack ($\alpha$) of the aircraft, and of the abscissa ($x_i$) of this point as a function of the bearing of the aircraft, means (15) for producing graphic symbols corresponding to the established data and means (16) for displaying the produced graphic symbols, characterized in that the processing means (12) comprise storage circuits (13) for storing the coordinates of the points representing the speed vectors at past instants, and calculation means (14) for successive implementation of the following operations: calculation of the variation of said abscissa between the present instant ($t = 0$) and a cyclically preceding instant ($t = -1$), shifting origin of the reference axis of the abscissae of the representational graph, said graph serving the purpose of depicting the n points representing the n preceding speed vectors, said shift corresponding to said calculation of variations, and that the means (15) for generating symbols and the display means (16) have a reticle (24) comprising the last n-1 points representing the last n-1 speed vectors, as well as the present instant speed vector, chronologically interconnected by segments (Rvi-RVi +1) forming a single line such that the development of the orientations of this speed vector during the most recent flight phase may be made apparent and as to permit improved piloting of the aircraft.

2. A system according to claim 1, characterized in that the quantification means and the processing means perform their operation at the repetition rate of a clock (21) of which the period is substantially shorter than the cycle period.

3. A system according to any one of claims 1 to 2, characterized in that the display means (16) are of the head-up type (6).

4. A system according to any one of claims 1 to 3, characterized in that the number n of speed vectors depicted is four.

5. A system according to any one of claims 1 to 4, characterized in that the measuring means comprise attitude detector means (9) and aircraft speed detector means (10), that the processing means (12) complementarily implement the following successive operations: predictive calculation (14) of the coordinates of the point representing the speed vector after a given number m of cycles following the present instant, calculation of the coordinates of the ballistic falls (CB) at a predetermined distance of for example 500 meters from the firing point of a missile which would be fired by the aircraft at the present instant and of another missile which would be fired m cycles later, and that the symbols producing means (15) generate a second "stadimetric" reticle (25) having the assumed size of a target (4) to be reached at the predetermined distance, centered on the representational graph at a point (B) corresponding to the calculated ballistic fall, and a third reticle (26) in the form of a bar connecting the centre (B) of the former to a point corresponding to identical elements (BI) as for the latter but in respect of the speed vector predicted for m cycles later.

6. A system according to claim 5, characterized in that the given number m of cycles amounts to two.

7. A system according to claim 6, characterized in that the prediction is made through a calculation based on a mathematical extrapolation formula of the KARMAN type.

8. A system according to one of claims 5 or 6, characterized in that the means for the ballistic fall calculation comprise means (9, 10) for performing a firing correction depending on the aircraft speed.

9. A system according to any one of claims 5 to 7, characterized in that the ballistic fall calculation means perform a firing correction depending on the approach of the firing aircraft (3) to a target (4).

10. A system according to any one of claims 1 to 8, characterized in that it comprises ancillary detection means (22, 23) for performing a drift correction on the display.

11. The use of a firing control system according to any one of claims 5 to 9, characterized in that it is made in an aircraft (3) to perform cannon firing operations or the training in cannon firing.

FIG_1

# FIG_2

0 118 341

FIG_3-a

FIG_3-b

0 118 341

# FIG_3-c

# FIG_4

7

FIG_5